# EUROPEAN PATENT APPLICATION

(11) **EP 4 730 708 A1**
(43) Date of publication of application: **22.04.2026**
(21) Application number: 25203809.6
(22) Date of filing: 22.09.2025
(51) Int. Cl.: H04L 9/40, G06F 21/55

(54) **MACHINE SPEED ATTACK DEFENSE**

(30) Priority: 15.10.2024 US 202418916345
(71) Applicant: CrowdStrike, Inc., Sunnyvale, CA 94086 (US)
(72) Inventor: Dalcher, Gregory, Sunnyvale, 94086 (US); Spurlock, Joel, Sunnyvale, 94086 (US)
(74) Representative: Murgitroyd & Company

(57) **Abstract**

The present disclosure provides techniques for machine speed attack defense. A processing device detects evidence of a potential in-progress cybersecurity attack with respect to an endpoint. The processing device generates a data structure based on the detected evidence. The processing device performs a fuzzy comparison based on the data structure and at least one data structure associated with a known cybersecurity attack. The processing device implements, based on the fuzzy comparison, a reversible response to the potential in-progress cybersecurity attack.

## Description

### TECHNICAL FIELD

Aspects of the present disclosure relate to cybersecurity, and more particularly, to machine speed attack defense.

### BACKGROUND

Cybersecurity refers to the practice of protecting computer systems, networks, and digital assets from theft, damage, unauthorized access, and various forms of cyber threats. Cybersecurity threats encompass a wide range of activities and actions that pose risks to the confidentiality, integrity, and availability of computer systems and data. These threats can include malicious activities such as viruses, ransomware, and hacking attempts aimed at exploiting vulnerabilities in software or hardware.

Artificial intelligence (AI) is a field of computer science that encompasses the development of systems capable of performing tasks that typically require human intelligence. Machine learning is a branch of artificial intelligence focused on developing algorithms and models that allow computers to learn from data and make predictions or decisions without being explicitly programmed. Machine learning models are the foundational building blocks of machine learning, representing mathematical and computational frameworks used to extract patterns and insights from data. AI models include machine learning models, large language models, and other types of models such as those based on neural networks, genetic algorithms, expert systems, Bayesian networks, reinforcement learning, decision trees, or combination thereof.

Accordingly there is provided a method, a system, and a computer program as detailed in the claims that follow.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram that illustrates an example of a system for machine speed attack defense in accordance with some aspects of the present disclosure.
FIG. 2 is a flow diagram of a method of machine speed attack defense in accordance with some aspects of the present disclosure.
FIG. 3 is a flow diagram of a method of machine speed attack defense in accordance with some aspects of the present disclosure.
FIG. 4 is a block diagram that illustrates an example of a system for machine speed attack defense in accordance with some aspects of the present disclosure.
FIG. 5 illustrates a diagrammatic representation of a machine in an example form of a computer system that may perform one or more of the operations described herein in accordance with some aspects of the present disclosure.

### DETAILED DESCRIPTION

As indicated above, cybersecurity refers to the practice of protecting computer systems, networks, and digital assets from theft, damage, unauthorized access, and various forms of cyber threats. Some cybersecurity attacks may utilize an AI model to aid in and/or perform the cybersecurity attack. Such cybersecurity attacks may be referred to as "AI-driven cybersecurity attacks." Cybersecurity systems may have difficulty preventing AI-driven cybersecurity attacks due to the speed and the adaptability of such attacks compared to speed and adaptability of human led cybersecurity attacks. For instance, an AI-driven cybersecurity attack may perform actions designed to penetrate an endpoint, obtain responses from a cybersecurity system, and perform additional actions (e.g., based on an output of an ML model, where the input to the ML model includes indications of the responses) based on the responses to penetrate the endpoint within a short time period.

Some cybersecurity systems may monitor activity on an endpoint to gather evidence of a cybersecurity attack. As the activity may include malicious activity and benign activity, a cybersecurity system may wait until a sufficient amount of evidence of malicious activity is collected before implementing a response in order to reduce a risk of irreversibly acting on a false positive detection. In one example, the cybersecurity system may score activities associated with the endpoint over a period of time. When the score exceeds a threshold score, the cybersecurity system may "convict" the endpoint, that is, the cybersecurity system may respond to a potential cybersecurity attack when the scored activities exceed the threshold score. In another example, the cybersecurity system may input indications of the activities into an ML model trained to predict cybersecurity attacks. When the ML model outputs an indication that a cybersecurity attack is likely occurring (e.g., based on the input and learned parameters of the ML model), the cybersecurity system may respond to the potential cybersecurity attack. However, some cybersecurity attacks (e.g., AI-driven cybersecurity attacks) may occur so rapidly that the cybersecurity attack is completed before the cybersecurity system has a chance to "convict" the endpoint. Furthermore, the response to the potential cybersecurity attack may be permanent and non-reversible, such as quarantining the endpoint. In the event that the potential cybersecurity attack is a false positive detected cybersecurity attack, reversing the response may be challenging.

The present disclosure addresses the above-noted and other deficiencies by using a processing device to perform machine speed attack defense. In an example, the processing device detects evidence of a potential in-progress cybersecurity attack with respect to an endpoint. The processing device generates a data structure based on the detected evidence. The processing device performs a fuzzy comparison based on the data structure and at least one data structure associated with a known cybersecurity attack. The processing device implements, based on the fuzzy comparison, a reversible response to the potential in-progress cybersecurity attack.

As discussed herein, the present disclosure provides an approach that improves the operation of a computer system by reducing an amount of computing resources used to detect and respond to a potential in-progress cybersecurity attack. For example, performing the fuzzy comparison and implementing the reversible response based on the fuzzy comparison may utilize less computing resources (e.g., processor clock cycles, memory, etc.) compared to computing resources used to respond to the potential cybersecurity attack based on an absolute conviction. Furthermore, in the event that the potential cybersecurity attack is a false positive, the implemented reversible response is readily reversible by a response team, and as such may utilize less computing resources compared to computing resources used to reverse more permanent responses. In addition, the present disclosure provides an improvement to the technological field of cybersecurity by increasing an amount of time for completion for a cybersecurity attack (e.g., an AI-driven cybersecurity attack) in order to give a response team time to address and engage with the cybersecurity attack. Furthermore, the present disclosure provides an improvement to the technological field of cybersecurity by reducing the impact of false positive cybersecurity attacks via implementing reversible responses to respond to the cybersecurity attack.

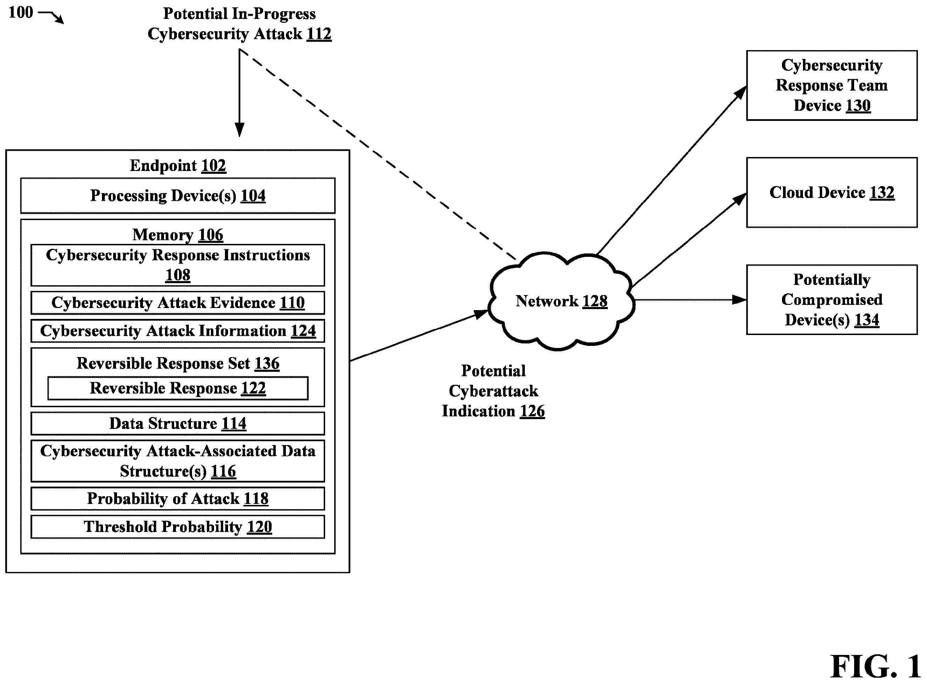

FIG. 1 is a block diagram 100 that illustrates an example of a system for machine speed attack defense in accordance with some aspects of the present disclosure. The system includes an endpoint 102. In an example, the endpoint 102 may be or include a desktop computing device, a laptop computing device, a tablet computing device, a smartphone, a server, a cloud account, a gaming console, a wearable computing device, etc. The endpoint 102 may include processing device(s) 104 and memory 106. In an example, the processing device(s) 104 may be or include central processing unit(s) (CPU(s)), graphics processing unit(s) (GPU(s)), neural processing unit(s) (NPU(s)), etc. The memory 106 may include cybersecurity response instructions 108 that, when executed by the processing device(s) 104, cause the endpoint 102 to perform machine speed defense as described herein.

The endpoint 102 may monitor activity on the endpoint 102. For example, the endpoint 102 may monitor processes executing on the endpoint 102, data received by the endpoint 102, data transmitted by the endpoint 102, etc. The endpoint 102 may detect, based on the monitored activity, evidence (referred to hereafter as "cybersecurity attack evidence 110") of a potential in-progress cybersecurity attack 112 being performed with respect to the endpoint 102. In an example, the potential in-progress cybersecurity attack 112 may be an AI-driven cybersecurity attack. In an example, the cybersecurity attack evidence 110 may include an unexpected program running on the endpoint 102.

The endpoint 102 may generate a data structure 114 (e.g., a vector, an array, etc.) based on the cybersecurity attack evidence 110. In some aspects, the data structure 114 may include numerical values that are based on the cybersecurity attack evidence 110. For example, the endpoint 102 may convert different portions of the cybersecurity attack evidence 110 into the numerical values. In some aspects, the data structure 114 may include strings that are based on the cybersecurity attack evidence 110.

The endpoint 102 may perform a fuzzy comparison based on the data structure 114 and cybersecurity attack-associated data structure(s) 116 (e.g., vector(s), array(s), etc.). The cybersecurity attack-associated data structure(s) 116 include data structures that are associated with known cybersecurity attacks. The cybersecurity attack-associated data structure(s) 116 may include data structures associated with AI-driven cybersecurity attacks and/or data structures associated with non-AI-driven cybersecurity attacks. In some aspects, the cybersecurity attack-associated data structure(s) 116 may include data structures that include numerical values. In some aspects, the cybersecurity attack-associated data structure(s) 116 may include data structures that include non-numerical values (e.g., strings). In an example, the fuzzy comparison may include performing a clustering operation with respect to the data structure 114 and cybersecurity attack-associated data structure(s) 116. In another example, the fuzzy comparison may include performing a similarity check with respect to the data structure 114 and the cybersecurity attack-associated data structure(s) 116.

Results of the fuzzy comparison may be indicative of a likelihood that the data structure 114 and the cybersecurity attack-associated data structure(s) 116 are a true match based on the entries of the data structure 114 and the entries of the cybersecurity attack-associated data structure(s) 116. Stated differently, the results of the fuzzy comparison may be indicative of a probability (referred to hereafter as a "probability of attack 118") that the potential in-progress cybersecurity attack 112 is an actual in-progress cybersecurity attack.

The endpoint 102 may compare the probability of attack 118 to a threshold probability 120 that is greater than 0% and less than 100%. In an example, the threshold probability 120 may be relatively low, such as 1-20%. In an example, the threshold probability 120 may range from 1-5%, 5-10%, 10-15%, etc. If the probability of attack 118 is less than or equal to the threshold probability 120, the endpoint 102 may continue to monitor activity on the endpoint 102 and take no further action with respect to the potential in-progress cybersecurity attack 112.

If the probability of attack 118 is greater than the threshold probability 120, the endpoint 102 may implement a reversible response 122 to the potential in-progress cybersecurity attack 112. In some aspects, the endpoint 102 may implement the reversible response 122 responsive to performing the fuzzy comparison. In general, the reversible response 122 may refer to actions performed by the endpoint 102 (or another device) that are able to be reversed. The reversible response 122 may increase a time for a cybersecurity attack to complete. In an example, the reversible response 122 may be or include delaying a launch of a remote execution command, resetting multifactor authentication associated with the endpoint 102 or a user of the endpoint 102, invalidating a security token associated with the endpoint 102, suspending a user account, suspending a service account, suspending access to a remote resource by at least one of the user account, the service account, a system address, or an internet protocol (IP) address, suspending access to a cloud resource by the at least one of the user account, the service account, the system address, or the IP address, suspending an ability to manipulate a system configuration by the user account, and/or suspending an ability to manipulate the system configuration by the service account. Implementing the reversible response 122 may provide a response team with time to analyze the potential in-progress cybersecurity attack 112 and formulate an appropriate response.

The endpoint 102 may also obtain information (referred to hereafter as "cybersecurity attack information 124") about the potential in-progress cybersecurity attack 112 based on the cybersecurity attack evidence 110. The cybersecurity attack information 124 may include an identifier of a local user account associated with a user of the endpoint 102, an identifier of a cloud user account of the user of the endpoint 102, a role associated with the cloud user account, an identifier of a security token associated with the endpoint 102, a predicted exfiltration route of the potential in-progress cybersecurity attack 112, a predicted exfiltration target of the potential in-progress cybersecurity attack 112, and/or explainability information about the potential in-progress cybersecurity attack 112. The predicted exfiltration route may indicate device(s) and/or program(s) that a cybersecurity attack is predicted to transfer data and/or instructions to in order to reach a target of the potential in-progress cybersecurity attack 112. The explainability information may include information pertaining to why the potential in-progress cybersecurity attack 112 was detected.

The endpoint 102 may generate an indication (referred to hereafter as a "potential cyberattack indication 126") based on the cybersecurity attack evidence 110, the cybersecurity attack information 124, and/or the reversible response 122. For instance, the potential cyberattack indication 126 may include the cybersecurity attack evidence 110, the cybersecurity attack information 124, and/or the reversible response 122. The endpoint 102 may transmit, via a network 128 (e.g., the Internet, a local area network (LAN), a wireless local area network (WLAN), a cellular network, etc.), the potential cyberattack indication 126 to a cybersecurity response team device 130, a cloud device 132, and/or potentially compromised device(s) 134. In some aspects, the endpoint 102 may present the potential cyberattack indication 126 to a user (e.g., via a display) of the endpoint 102. In some aspects, the endpoint 102 may perform further analysis of the potential in-progress cyberattack 112 based on the potential cyberattack indication 126. In some aspects, the endpoint 102 may perform a remedial action based on the potential cyberattack indication 126. In some aspects, the cybersecurity response instructions 108 may be included in a security agent or the cybersecurity response instructions 108 may execute alongside the security agent.

In an example, the cybersecurity response team device 130 may receive the potential cyberattack indication 126 from the endpoint 102 via the network 128. Response team members may analyze the potential in-progress cybersecurity attack 112 based on the cybersecurity attack evidence 110, the cybersecurity attack information 124, and/or the reversible response 122 included in the potential cyberattack indication 126. In some aspects, the analysis may be performed completely or in part by an ML model.

If the analysis indicates that the potential in-progress cybersecurity attack 112 is not likely to be an actual cybersecurity attack, the cybersecurity response team device 130 may transmit, to the endpoint 102 via the network 128, an indication that the potential in-progress cybersecurity attack 112 was falsely detected as a cybersecurity attack. The indication may include instructions for reversing the reversible response 122. The endpoint 102 may receive the indication via the network 128. The endpoint 102 may reverse the reversible response 122 based on the instructions included in the indication. For example, the endpoint 102 may allow a launch of a remote execution command based on the instructions included in the indication.

If the analysis indicates that the potential in-progress cybersecurity attack 112 is likely to be an actual cybersecurity attack, the cybersecurity response team device 130 may transmit, to the endpoint 102 via the network 128, an indication that the potential in-progress cybersecurity attack is an actual in-progress cybersecurity attack. The indication may include instructions for performing a non-reversible response to address the cybersecurity attack. The endpoint 102 may receive the indication via the network 128. The endpoint 102 may implement the non-reversible response based on the instructions included in the indication. For example, the endpoint 102 may quarantine a file, a process, etc. based on the instructions included in the indication.

In an example, the cloud device 132 (e.g., a cloud server) may receive the potential cyberattack indication 126 from the endpoint 102 via the network 128. The cloud device 132 may perform actions based on the potential cyberattack indication 126. For example, the cloud device 132 may restrict access to a cloud user account based on the potential cyberattack indication 126.

In an example, the potentially compromised device(s) 134 may receive the potential cyberattack indication 126 from the endpoint 102 via the network 128. In an example, the potentially compromised device(s) 134 may be endpoints associated with the same organization as the endpoint 102. The potentially compromised device(s) 134 may perform actions based on the potential cyberattack indication 126. For example, the potentially compromised device(s) 134 may implement a reversible response (e.g., the reversible response 122) based on the potential cyberattack indication 126 in order to provide response team members with time to analyze and respond to the potential in-progress cybersecurity attack 112.

In some aspects, the endpoint 102 may identify the reversible response 122 from a set of reversible responses (referred to hereafter as "a reversible response set 136"), where the reversible response set 136 forms a hierarchy of reversible responses of different impacts. Each reversible response in the reversible response set 136 may be associated with (e.g., assigned to) a different threshold probability. For example, the reversible response 122 may be associated with the threshold probability 120 (e.g., 5%), a second reversible response in the reversible response set 136 may be associated with a second threshold probability (e.g., 10%), and a third reversible response in the reversible response set 136 may be associated with a third threshold probability (e.g., 15%). Furthermore, each reversible response in the reversible response set 136 may be associated with a different impact/ease of reversal. In an example, the reversible response 122 may be relatively low-impact, the second reversible response may have a medium impact, and the third reversible response may have a relatively high impact. The endpoint 102 may identify a reversible response in the reversible response set 136 based on the probability of attack 118 exceeding one of the threshold probabilities (e.g., the threshold probability 120, the second threshold probability, or the third threshold probability. The endpoint 102 may implement the identified response.

In some aspects, the processing device(s) 104 of the endpoint 102 may include a first processing device associated with first characteristics and a second processing device associated with second characteristics. In an example, the first processing device may be a CPU and the second processing device may be an NPU. In such aspects, the endpoint 102 may offload detecting the evidence of the potential in-progress cybersecurity attack 112 from the first processing device to the second processing device based on at least one of the first characteristics or the second characteristics.

In some aspects, the endpoint 102 may belong to an organization. In such aspects, the endpoint 102 may offload detecting the evidence of the potential in-progress cybersecurity attack 112 to other endpoints in the organization.

Cybersecurity attack speed may challenge an ability of a response speed to engage a cybersecurity attack before the cybersecurity attack succeeds (i.e., before the cybersecurity attack "breaks out." An AI-driven cybersecurity attack may be completed within seconds, or even sub-seconds. Such short time frames may make effective responses challenging. For instance, using an AI-driven attack, an attacker may initiate and complete an attack before the response team has time to engage.

Some techniques for mitigating/addressing cybersecurity attacks (e.g., AI-driven cybersecurity attacks) may include implementing a response when convincing evidence of a cybersecurity attack is available (i.e., a conviction occurs). Further, such techniques may generally entail halting actions and quarantining objects (i.e., non-reversible responses). Such techniques may not include slow-down and/or non-permanent responses (i.e., reversible responses) focused on containing breakout.

Various technologies pertaining to slowing down a cybersecurity attack in order to give a response team time to engage with the cybersecurity attack are described herein. In some aspects, an endpoint (e.g., a computing system) detects evidence of a malicious operation using fuzzy detection methods (e.g., clustering and/or a similarity check). The endpoint may identify accounts (e.g., local accounts and cloud accounts) and tokens involved in the malicious operation. The endpoint may determine likely exfiltration routes and exfiltration targets for breakout. The endpoint may perform a preemptive local response to slow down the detected malicious operations. The preemptive local response may pertain to exfiltration and "digging in" (i.e., setting up for persistence). In some examples, the preemptive local response may hold a launch of a remote execution command (e.g., PsExec, a PowerShell Invoke-Command, Windows Remote Management (WinRM), a system center configuration manager, etc.), particularly when started by a user. The endpoint may slow down exfiltration to the cloud by performing a multifactor authentication (MFA) reset, invalidating access of involved tokens in the cloud, etc.

In some aspects, the endpoint slows operations of the cybersecurity attack for purposes of "digging in" and exfiltrating using non-permanent and reversible means that have a "low blast radius." The endpoint may determine identities (e.g., user identities, account identities, tokens, cloud identities, etc.) involved in the cybersecurity attack in order to provide for a more targeted response that minimizes adverse system effects and risks from false positive detection of cybersecurity attacks. The endpoint may inform cloud systems of cloud identities involved in the attack, and the cloud systems may freeze such cloud identities (e.g., through token invalidation, role access restrictions, etc.). The endpoint may send alerts to a response team (e.g., a human response team). The aforementioned slowdown of the malicious operations may provide the response team with time to engage with the cybersecurity attack. The alerts may include forensic and explainability details as to why detection occurred, identities involved in the cybersecurity attack, and/or exfiltration attempt details, which may help to guide response and remediation by the response team.

In some aspects, a computing system determines that a cybersecurity attack (e.g., an AI-driven cybersecurity attack) is likely occurring using fuzzy matching approaches. The computing system does not wait until an exact determination is made before taking action. The computing system may perform detection at a source (i.e., an endpoint) first using acceleration and offloading capabilities (e.g., offloading certain tasks to a neural processing unit (NPU) or a graphics card). The computing system may focus on slowing the progression of the cybersecurity attack using non-destructive and reversible techniques, rather than blocking the cybersecurity attack with a final operation. The computing system may give a human response team time to engage with the cybersecurity attack and to take decisive action. The computing system may collect forensic and explainability data to assist the human response team in assessing the cybersecurity attack and in determining an appropriate response. The computing system may use "low blast radius" mechanisms to slow the cybersecurity attack with precision and limited scope. The computing system may alert other potentially compromised systems of possible infiltration by the cybersecurity attack. The computing system may track identities used and/or potentially used by the cybersecurity attack across systems including into and out of the cloud. Tracking the identities and/or potential identities in such a manner may aid in the "low blast radius" approach of slowing the progression of the cybersecurity attack.

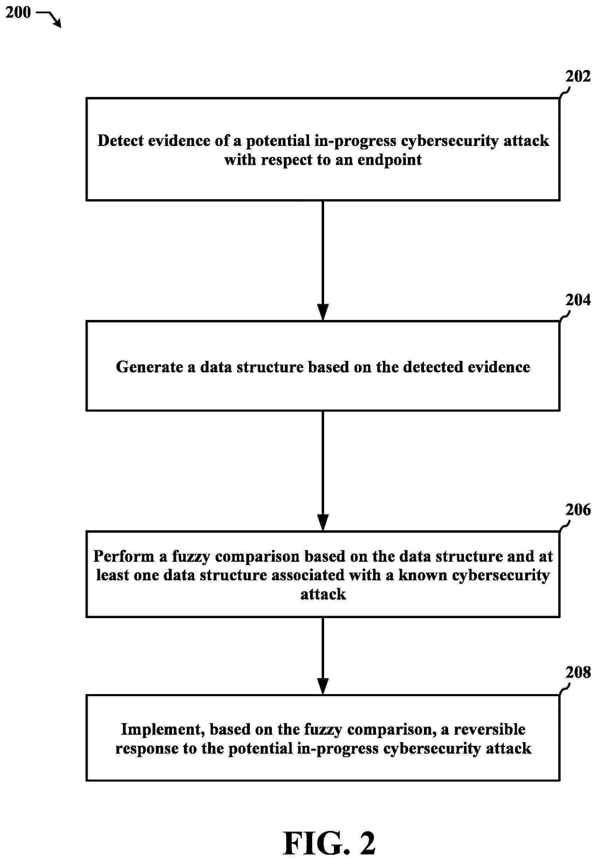

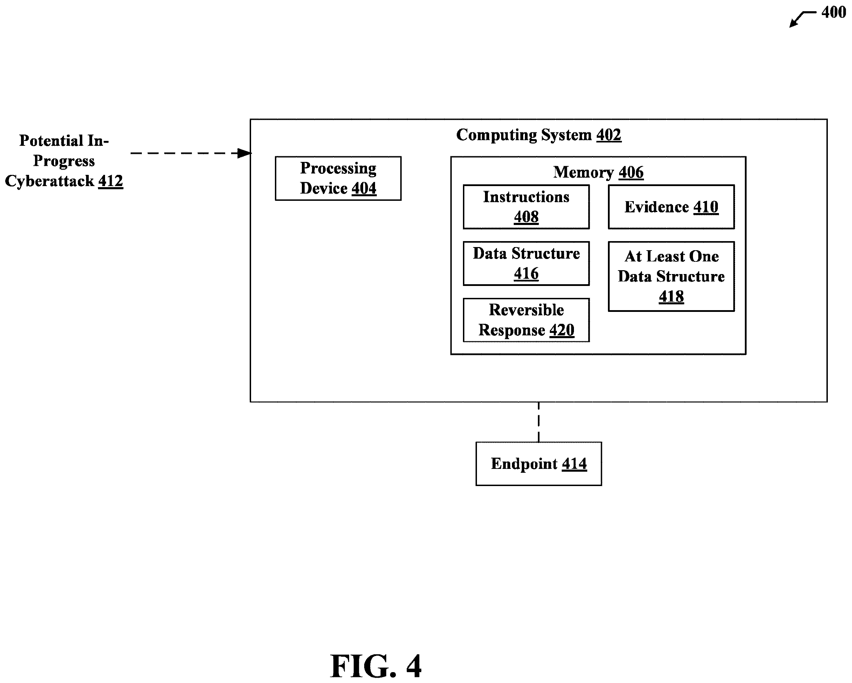

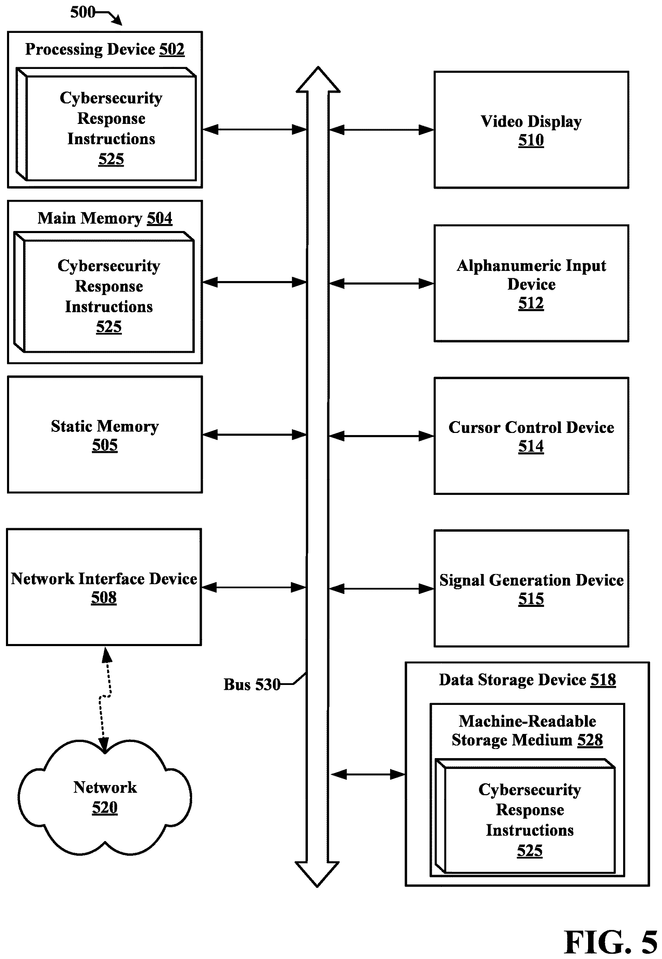

FIG. 2 is a flow diagram 200 of a method of machine speed attack defense in accordance with some aspects of the present disclosure. The method may be performed by processing logic that may include hardware (e.g., a processing device), software (e.g., instructions running/executing on a processing device), firmware (e.g., microcode), or a combination thereof. In some aspects, at least a portion of the method may be performed by the endpoint 102 (shown in FIG. 1), the processing device(s) 104 (shown in FIG. 1), the computing system 402 (shown in FIG. 4) the processing device 404 (shown in FIG. 4), the computer system 500 (shown in FIG. 5) or a combination thereof.

The method illustrates example functions used by various embodiments. Although specific function blocks ("blocks") are disclosed in the method, such blocks are examples. That is, embodiments are well suited to performing various other blocks or variations of the blocks recited in the method. It is appreciated that the blocks in the method may be performed in an order different than presented, and that not all of the blocks in the method may be performed.

At block 202, a processing device detects evidence of a potential in-progress cybersecurity attack with respect to an endpoint. In an example, the evidence may be or include the cybersecurity attack evidence 110, the potential in-progress cybersecurity attack may be or include the potential in-progress cybersecurity attack 112, and the endpoint may be or include the endpoint 102. In another example, the evidence may be or include the evidence 410, the potential in-progress cybersecurity attack may be or include the potential in-progress cybersecurity attack 412, and the endpoint may be or include the endpoint 414.

At block 204, the processing device generates a data structure based on the detected evidence. In an example, the data structure may be or include the data structure 114. In another example, the data structure may be or include the data structure 416.

At block 206, the processing device performs a fuzzy comparison based on the data structure and at least one data structure associated with a known cybersecurity attack. In an example, the at least one data structure may be or include the cybersecurity attack-associated data structure(s) 116. In an example, the at least one data structure may be or include the at least one data structure 418.

At block 208, the processing device implements, based on the fuzzy comparison, a reversible response to the potential in-progress cybersecurity attack. In an example, the reversible response may be or include the reversible response 122. In an example, the reversible response may be or include the reversible response 420.

The method illustrates example functions used by various embodiments. Although specific function blocks ("blocks") are disclosed in the method, such blocks are examples. That is, embodiments are well suited to performing various other blocks or variations of the blocks recited in the method. It is appreciated that the blocks in the method may be performed in an order different than presented, and that not all of the blocks in the method may be performed.

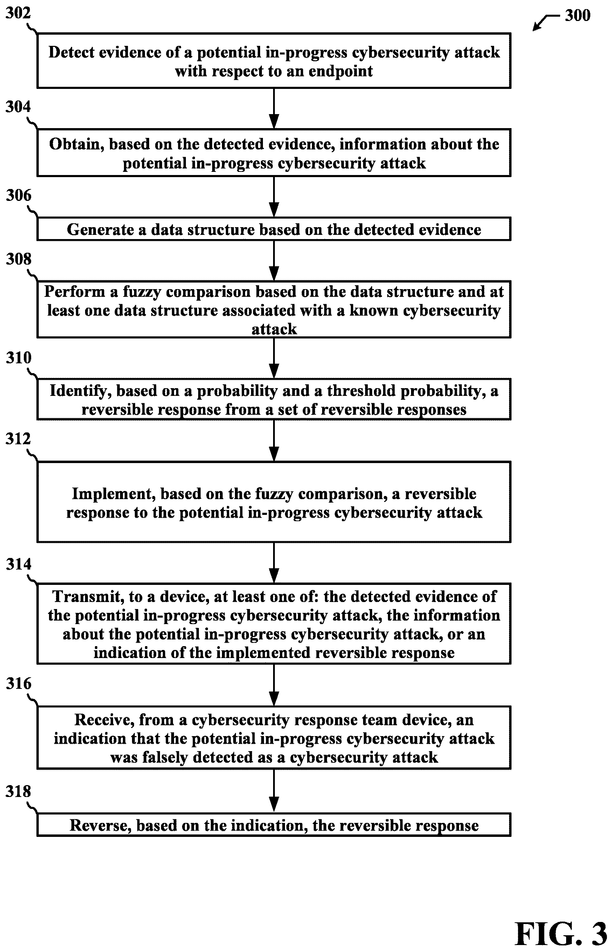

FIG. 3 is a flow diagram 300 of a method of machine speed attack defense in accordance with some aspects of the present disclosure. The method may be performed by processing logic that may include hardware (e.g., a processing device), software (e.g., instructions running/executing on a processing device), firmware (e.g., microcode), or a combination thereof. In some aspects, at least a portion of the method may be performed by the endpoint 102 (shown in FIG. 1), the processing device(s) 104 (shown in FIG. 1), the computing system 402 (shown in FIG. 4) the processing device 404 (shown in FIG. 4), the computer system 500 (shown in FIG. 5) or a combination thereof.

At block 302, a processing device detects evidence of a potential in-progress cybersecurity attack with respect to an endpoint. In an example, the evidence may be or include the cybersecurity attack evidence 110, the potential in-progress cybersecurity attack may be or include the potential in-progress cybersecurity attack 112, and the endpoint may be or include the endpoint 102. In another example, the evidence may be or include the evidence 410, the potential in-progress cybersecurity attack may be or include the potential in-progress cybersecurity attack 412, and the endpoint may be or include the endpoint 414.

In some aspects, the endpoint may include a first processing device associated with first characteristics and a second processing device associated with second characteristics, and the detecting the evidence of the potential in-progress cybersecurity attack may include offloading the detecting the evidence of the potential in-progress cybersecurity attack from the first processing device to the second processing device based on at least one of the first characteristics or the second characteristics. For example, the processing device(s) 104 may include a first processing device associated with first characteristics and a second processing device associated with second characteristics, and the detecting the evidence of the potential in-progress cybersecurity attack may include offloading the detecting the evidence of the potential in-progress cybersecurity attack from the first processing device to the second processing device based on at least one of the first characteristics or the second characteristics.

In some aspects, the potential in-progress cybersecurity attack comprises an artificial intelligence AI-driven cybersecurity attack, where the AI driven cybersecurity attack utilizes a machine learning (ML) model. For example, the potential in-progress cybersecurity attack 112 and/or the potential in-progress cybersecurity attack 412 may be an AI-driven cybersecurity attack that utilizes an ML model.

At block 304, the processing device may obtain, based on the detected evidence, information about the potential in-progress cybersecurity attack. Implementing the reversible response may include implementing the reversible response based on the obtained information about the potential in-progress cybersecurity attack. For example, the information about the potential in-progress cybersecurity attack may be or include the cybersecurity attack information 124.

In some aspects, the information about the potential in-progress cybersecurity attack may include at least one of: an identifier of a local user account, an identifier of a cloud user account, a role associated with the cloud user account, an identifier of a security token associated with the endpoint, a predicted exfiltration route of the potential in-progress cybersecurity attack, a predicted exfiltration target of the potential in-progress cybersecurity attack, or explainability information about the potential in-progress cybersecurity attack. For example, the cybersecurity attack information 124 may include at least one of: an identifier of a local user account, an identifier of a cloud user account, a role associated with the cloud user account, an identifier of a security token associated with the endpoint, a predicted exfiltration route of the potential in-progress cybersecurity attack, a predicted exfiltration target of the potential in-progress cybersecurity attack, or explainability information about the potential in-progress cybersecurity attack.

At block 306, the processing device generates a data structure based on the detected evidence. In an example, the data structure may be or include the data structure 114. In another example, the data structure may be or include the data structure 416.

At block 308, the processing device performs a fuzzy comparison based on the data structure and at least one data structure associated with a known cybersecurity attack. In an example, the at least one data structure may be or include the cybersecurity attack-associated data structure(s) 116. In an example, the at least one data structure may be or include the at least one data structure 418.

In some aspects, the fuzzy comparison may include at least one of: a clustering operation with respect to the data structure and the at least one data structure, or a similarity check operation with respect to the data structure and the at least one data structure. For example, the aforementioned aspect may be associated with aspects described above in the description of FIG. 1.

In some aspects, the fuzzy comparison may indicate a probability that the potential in-progress cybersecurity attack is an actual cybersecurity attack, where the probability is greater than a threshold probability, and where the threshold probability is greater than zero percent and less than one-hundred percent, and at block 310, the processing device may identify, based on a probability and a threshold probability, a reversible response from a set of reversible responses. Implementing the reversible response may include implementing the identified reversible response. In an example, the probability may be or include the probability of attack 118, the threshold probability may be or include the threshold probability 120, and set of reversible responses may be or include the reversible response set 136.

At block 312, the processing device implements, based on the fuzzy comparison, a reversible response to the potential in-progress cybersecurity attack. In an example, the reversible response may be or include the reversible response 122. In an example, the reversible response may be or include the reversible response 420.

In some aspects, implementing the reversible response may include at least one of: delaying a launch of a remote execution command, resetting multi-factor authentication, invalidating a security token, suspending a user account, suspending a service account, suspending access to a remote resource by at least one of the user account, the service account, a system address, or an internet protocol (IP) address, suspending access to a cloud resource by the at least one of the user account, the service account, the system address, or the IP address, suspending an ability to manipulate a system configuration by the user account, or suspending an ability to manipulate the system configuration by the service account. For example, implementing the reversible response 122 and/or the reversible response 420 may include at least one of: delaying a launch of a remote execution command, resetting multi-factor authentication, or invalidating a security token.

In some aspects, implementing the reversible response to the potential in-progress cybersecurity attack based on the fuzzy comparison may include implementing the reversible response to the potential in-progress cybersecurity attack responsive to performing the fuzzy comparison. For example, implementing the reversible response 122 and/or the reversible response 420 to the potential in-progress cybersecurity attack based on the fuzzy comparison may include implementing the reversible response to the potential in-progress cybersecurity attack responsive to performing the fuzzy comparison.

At block 314, the processing device may transmit, to a device, at least one of: the detected evidence of the potential in-progress cybersecurity attack, the information about the potential in-progress cybersecurity attack, or an indication of the implemented reversible response. In some aspects, the device may include at least one of a cybersecurity response team device, a cloud service provider device, or a potentially comprised device that is likely to be a victim of the potential in-progress cybersecurity attack. For example, the detected evidence of the potential in-progress cybersecurity attack, the information about the potential in-progress cybersecurity attack, and/or an indication of the implemented reversible response may be included in the potential cyberattack indication 126. In an example, the cybersecurity response team device may be or include the cybersecurity response team device 130, the cloud service provider device may be or include the cloud device 132, and/or the potentially comprised device may be or include the potentially compromised device(s) 134.

At block 316, the processing device may receive, from a cybersecurity response team device, an indication that the potential in-progress cybersecurity attack was falsely detected as a cybersecurity attack. For example, the aforementioned aspect may be associated with aspects described above in the description of FIG. 1.

At block 318, the processing device may reverse, based on the indication, the reversible response. For example, the aforementioned aspect may be associated with aspects described above in the description of FIG. 1.

In some aspects, the reversible response may increase an amount of time for the potential in-progress cybersecurity attack to complete. In an example, implementing the reversible response 122 may increase an amount of time for the potential in-progress cybersecurity attack 112 to complete. In another example, implementing the reversible response 420 may increase an amount of time for the potential in-progress cybersecurity attack 412 to complete.

FIG. 4 is a block diagram 400 that illustrates an example of a computing system 402 for machine speed attack defense in accordance with some aspects of the present disclosure. In some aspects, the computing system 402 may perform some or all of the functionality described herein. The computing system 402 includes a processing device 404 and memory 406. The memory 406 stores instructions 408 that are executed by the processing device 404. The instructions 408, when executed by the processing device 404, cause the processing device 404 to detect evidence 410 of a potential in-progress cybersecurity attack 412 with respect to an endpoint 414. The instructions 408, when executed by the processing device 404, cause the processing device 404 to generate a data structure 416 based on the detected evidence. The instructions 408, when executed by the processing device 404, cause the processing device 404 to perform a fuzzy comparison based on the data structure 416 and at least one data structure 418 associated with a known cybersecurity attack. The instructions 408, when executed by the processing device 404, cause the processing device 404 to implement, based on the fuzzy comparison, a reversible response 420 to the potential in-progress cybersecurity attack 412, where the reversible response 420 increases an amount of time for the potential in-progress cybersecurity attack 412 to complete.

FIG. 5 illustrates a diagrammatic representation of a machine in the example form of a computer system 500 within which a set of instructions, for causing the machine to perform any one or more of the methodologies discussed herein for machine speed attack defense.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In some embodiments, the computer system 500 may be representative of a server.

The computer system 500 includes a processing device 502, a main memory 504 (e.g., read-only memory (ROM), flash memory, dynamic random access memory (DRAM), a static memory 505 (e.g., flash memory, static random access memory (SRAM), etc.), and a data storage device 518 which communicate with each other via a bus 530. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

The computer system 500 may further include a network interface device 508 which may communicate with a network 520. The computer system 500 also may include a video display unit 510 (e.g., a liquid crystal display (LCD) or a cathode ray tube (CRT)), an alphanumeric input device 512 (e.g., a keyboard), a cursor control device 514 (e.g., a mouse), and a signal generation device 515 (e.g., an acoustic signal generation device, such as a speaker). In some embodiments, the video display unit 510, the alphanumeric input device 512, and the cursor control device 514 may be combined into a single component or device (e.g., an LCD touch screen).

The processing device 502 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. The processing device 502 may also be one or more special-purpose processing devices such as an application specific integrated circuit (ASIC), a field programmable gate array (FPGA), a digital signal processor (DSP), network processor, or the like. The processing device 502 is configured to execute cybersecurity response instructions 525, for performing the operations and steps discussed herein. For example, the cybersecurity response instructions 525 may include instructions for detecting evidence of a potential in-progress cybersecurity attack with respect to an endpoint. The cybersecurity response instructions 525 may include instructions for generating a data structure based on the detected evidence. The cybersecurity response instructions 525 may include instructions for performing a fuzzy comparison based on the data structure and at least one data structure associated with a known cybersecurity attack. The cybersecurity response instructions 525 may include instructions for implementing, based on the fuzzy comparison, a reversible response to the potential in-progress cybersecurity attack.

The data storage device 518 may include a machine-readable storage medium 528 that stores the cybersecurity response instructions 525 (e.g., software) embodying any one or more of the methodologies of functions described herein. The cybersecurity response instructions 525 may also reside, completely or at least partially, within the main memory 504 or within the processing device 502 during execution thereof by the computer system 500; the main memory 504 and the processing device 502 also constituting machine-readable storage media. The cybersecurity response instructions 525 may further be transmitted or received over a network 520 via the network interface device 508.

While the machine-readable storage medium 528 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable storage medium includes any mechanism for storing information in a form (e.g., software, processing application) readable by a machine (e.g., a computer). The machine-readable storage medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "detecting," "generating," "performing," "implementing," "obtaining," "transmitting," "receiving," "delaying," "resetting," "invalidating," "identifying," "reversing," "determining," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission, or display devices. Also, the terms "first," "second," "third," "fourth" etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general-purpose computing device selectively programmed by a computer program stored in the computing device. Such a computer program may be stored in a computer-readable non-transitory storage medium.

The methods and illustrative examples described herein are not inherently related to any particular computer or other apparatus. Various general-purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112(f) for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

## Claims

1. A method, comprising:
detecting evidence of a potential in-progress cybersecurity attack with respect to an endpoint;
generating a data structure based on the detected evidence;
performing a fuzzy comparison based on the data structure and at least one data structure associated with a known cybersecurity attack; and
implementing, by a processing device and based on the fuzzy comparison, a reversible response to the potential in-progress cybersecurity attack.

2. The method of claim 1, wherein the potential in-progress cybersecurity attack comprises an artificial intelligence, AI, driven cybersecurity attack, wherein the AI driven cybersecurity attack utilizes a machine learning, ML, model.

3. The method of any preceding claim, further comprising:
obtaining, based on the detected evidence, information about the potential in-progress cybersecurity attack, wherein the implementing the reversible response comprises implementing the reversible response based on the obtained information about the potential in-progress cybersecurity attack.

4. The method of claim 3, further comprising:
transmitting, to a device, at least one of:
the detected evidence of the potential in-progress cybersecurity attack,
the information about the potential in-progress cybersecurity attack, or
an indication of the implemented reversible response.

5. The method of claim 4, wherein the device comprises at least one of:
a cybersecurity response team device,
a cloud service provider device, or
a potentially comprised device that is likely to be a victim of the potential in-progress cybersecurity attack.

6. The method of claims 3 to 5, wherein the information about the potential in-progress cybersecurity attack comprises at least one of:
an identifier of a local user account,
an identifier of a cloud user account,
a role associated with the cloud user account,
an identifier of a security token associated with the endpoint,
a predicted exfiltration route of the potential in-progress cybersecurity attack,
a predicted exfiltration target of the potential in-progress cybersecurity attack, or
explainability information about the potential in-progress cybersecurity attack.

7. The method of any preceding claim, wherein the implementing the reversible response comprises at least one of:
delaying a launch of a remote execution command,
resetting multi-factor authentication,
invalidating a security token,
suspending a user account,
suspending a service account,
suspending access to a remote resource by at least one of the user account, the service account, a system address, or an internet protocol (IP) address,
suspending access to a cloud resource by the at least one of the user account, the service account, the system address, or the IP address,
suspending an ability to manipulate a system configuration by the user account, or
suspending an ability to manipulate the system configuration by the service account.

8. The method of any preceding claim, wherein the fuzzy comparison indicates a probability that the potential in-progress cybersecurity attack is an actual cybersecurity attack, wherein the probability is greater than a threshold probability, and wherein the threshold probability is greater than zero percent and less than one-hundred percent; and optionally further comprising:
identifying, based on the probability and the threshold probability, the reversible response from a set of reversible responses, wherein each reversible response in the set of reversible responses is assigned to a different threshold probability, and wherein the implementing the reversible response comprises implementing the identified reversible response.

9. The method of any preceding claim, wherein the fuzzy comparison comprises at least one of:
a clustering operation with respect to the data structure and the at least one data structure, or
a similarity check operation with respect to the data structure and the at least one data structure.

10. The method of any preceding claim, wherein the endpoint comprises a first processing device associated with first characteristics and a second processing device associated with second characteristics, and wherein the detecting the evidence of the potential in-progress cybersecurity attack comprises offloading the detecting the evidence of the potential in-progress cybersecurity attack from the first processing device to the second processing device based on at least one of the first characteristics or the second characteristics.

11. The method of any preceding claim, wherein the implementing the reversible response to the potential in-progress cybersecurity attack based on the fuzzy comparison comprises implementing the reversible response to the potential in-progress cybersecurity attack responsive to performing the fuzzy comparison.

12. The method of any preceding claim, further comprising:
receiving, from a cybersecurity response team device, an indication that the potential in-progress cybersecurity attack was falsely detected as a cybersecurity attack; and
reversing, based on the indication, the reversible response.

13. The method of any preceding claim, wherein the reversible response increases an amount of time for the potential in-progress cybersecurity attack to complete.

14. A system, comprising:
a processing device; and
a memory to store instructions that, when executed by the processing device, cause the processing device to carry out the method of any preceding claim.

15. A computer program which, when executed by a processing device, is configured to cause the processing device to carry out the method of any one of claims 1 to 13.
